# EUROPEAN PATENT APPLICATION

(11) **EP 4 813 701 A1**
(43) Date of publication of application: **30.09.2026**
(21) Application number: 26166311.6
(22) Date of filing: 20.03.2026
(51) Int. Cl.: B60K 1/04, B62D 21/15

(54) **VEHICLE LOWER PORTION STRUCTURE**

(30) Priority: 26.03.2025 JP 2025052172
(71) Applicant: Toyota Jidosha Kabushiki Kaisha, Toyota-shi, Aichi-ken 471-8571 (JP)
(72) Inventor: KAWAMOTO, Naoya, Toyota-shi, Aichi-ken, 471-8571 (JP); FUJIWARA, Nobuyoshi, Toyota-shi, Aichi-ken, 471-8571 (JP); KUMAZAWA, Kazuya, Toyota-shi, Aichi-ken, 471-8571 (JP); KIMURA, Kenta, Toyota-shi, Aichi-ken, 471-8571 (JP)
(74) Representative: TBK

(57) **Abstract**

A terminal to be connected to auxiliary equipment mounted in a vehicle is disposed at a side wall of a storage battery module. As a result, the storage battery module may be made lower in height than in a structure in which a terminal is provided standing from an upper portion of a storage battery module. An inflected portion is formed in a side plate of a lower case. The inflected portion is inflected toward a direction of a step portion provided at a lower side of the terminal. During a side impact of the vehicle, collision energy is absorbed by the side plate of the lower case deforming about the inflected portion. Consequently, a storage battery pack may be protected.

## Description

### Technical Field

The present disclosure relates to a vehicle lower portion structure.

### Related Art

Japanese Patent Application Laid-Open (JP-A) No. 2019-091605 (Patent Document 1) discloses a technology relating to a protective structure for a battery pack mounted in a vehicle. In this conventional technology, a battery pack frame is provided that wraps around side faces of the battery pack and supports the battery pack. A left and right pair of under reinforcements are also provided, which extend in a vehicle front-and-rear direction at vehicle width direction outer sides of the battery pack and are each joined to the battery pack frame. Braces are also provided, which connect one with the other of the vehicle width direction outer sides of the battery pack frame.

In the conventional technology according to this structure, when a collision from sideward of the vehicle occurs (below referred to as a vehicle side impact), a collision load applied to an under reinforcement is transmitted to the opposite side from the collision via the battery pack frame and the under braces. Therefore, with the conventional technology, a load applied to the battery pack may be reduced.

A terminal of a battery is provided at an upper end portion. Providing the terminal at a side portion of the battery may enable a reduction in height of the battery pack. However, when the terminal of the battery is provided at the side portion, protecting the battery pack during a side impact of the vehicle is a challenge.

The conventional technology described above has a large number of components and an increased number of assembly steps. Furthermore in the conventional technology described above, each under reinforcement is joined to the battery pack frame in the vehicle vertical direction. Accordingly, there is further scope for improvement in regard to reducing height of the battery pack (and battery case).

### SUMMARY

In consideration of the circumstances described above, an object of the present disclosure is to provide a vehicle lower portion structure that may both realize a reduction in height of a battery case and, with a simple structure, realize protection of the battery case during a side impact of the vehicle.

In a vehicle lower portion structure according to a first aspect, a battery case mounted at a vehicle lower portion includes: a lower case that structures an accommodation portion in which a battery module is accommodated, the battery module being provided with a terminal to be connected to auxiliary equipment mounted in the vehicle, the terminal projecting to a vehicle width direction outer side from an upper portion side of a side wall portion provided at the vehicle width direction outer side of the battery module; and an upper cover that, together with the lower case, structures the accommodation portion. In the vehicle lower portion structure according to the first aspect, an inflected portion is formed in a side wall portion of the lower case, the inflected portion being provided at the lower side of the terminal and inflecting toward a direction of a step portion formed in the battery module, the step portion being formed in the vehicle width direction between the terminal and the side wall portion of the battery module.

In the vehicle lower portion structure according to the first aspect, the battery case mounted at the vehicle lower portion is provided with the lower case and the upper cover. The accommodation portion in which the battery module is accommodated is structured by the lower case and the upper cover. The terminal of the battery module, which is to be connected to auxiliary equipment mounted in the vehicle, is disposed at the upper portion side of the side wall portion provided at the vehicle width direction outer side.

Thus, in the present aspect, because the terminal is formed to project to the vehicle width direction outer side from the side wall portion of the battery module, the battery module (and battery case) may be reduced in height compared to a structure in which a terminal is provided standing from an upper portion of a battery module.

Meanwhile, the inflected portion is formed in the side wall portion of the lower case. The inflected portion is provided to the lower side of the terminal and is inflected toward the direction of the step portion that is formed in the vehicle width direction between the terminal and side wall portion of the battery module.

During a side impact of the vehicle, the side wall portion of the lower case deforms about the inflected portion. Because the inflected portion is provided at the lower side of the terminal of the battery module, during the side impact of the vehicle, the inflected portion abuts against the side wall portion of the battery module before a collision load is applied to the terminal. Thus, collision energy is absorbed (EA) by the side wall portion of the lower case deforming about the inflected portion. Thus, the magnitude of a collision impact that is applied to the terminal may be reduced. That is, the alteration of the shape of the side wall portion of the lower case in the present aspect enables protection of the battery case during the side impact of the vehicle.

In a vehicle lower portion structure according to a second aspect, in the vehicle lower portion structure according to the first aspect, the battery case further includes: a first flange portion that projects to the outer side of the accommodation portion from an outer edge portion of the lower case; and a second flange portion that projects to the outer side of the accommodation portion from an outer edge portion of the upper cover and is joined to the first flange portion. In the vehicle lower portion structure according to the second aspect, an upward protruding portion is formed at an upper end portion of the side wall portion of the lower case, the upward protruding portion overlapping with at least a portion of the terminal in a vehicle side view, being provided with an inflection point at the upper side relative to the first flange portion and being bent back in the vehicle vertical direction, and linking with the first flange portion.

In the vehicle lower portion structure according to the second aspect, the first flange portion projects from the outer edge portion of the lower case to the outer side of the accommodation portion. The second flange portion projects from the outer edge portion of the upper cover to the outer side of the accommodation portion, and the second flange portion is joined to the first flange portion. The upward protruding portion is formed at the upper end portion of the side wall portion of the lower case. The upward protruding portion overlaps with at least a portion of the terminal in vehicle side view, is bent back in the vehicle vertical direction with the inflection point being provided at the upper side relative to the first flange portion, and links with the first flange portion.

Thus, the upward protruding portion is formed in a state that provides a gap in the vehicle width direction. Hence, in the present aspect, when a collision load is applied during a side impact of the vehicle, the upward protruding portion is crushed in the vehicle width direction. Thus, collision energy may be absorbed, and the magnitude of a collision load that is applied to the terminal may be reduced. As a result, a collision load applied to the battery module side (of the terminal) may be reduced.

In a vehicle lower portion structure according to a third aspect, the vehicle lower portion structure according to the first aspect or the second aspect further includes: a pair of rockers that extend in the vehicle front-and-rear direction at both vehicle width direction outer sides of the battery case; a panel member that is provided at the lower side of the battery case and that extends in the vehicle front-and-rear direction and the vehicle width direction; and a pair of brackets that are provided between each rocker and the panel member in the vehicle vertical direction, the brackets each being joined to the first flange portion and the panel member.

The vehicle lower portion structure according to the third aspect is provided with the pair of rockers, the panel member and the pair of brackets. The pair of rockers extend in the vehicle front-and-rear direction at each of the two vehicle width direction outer sides of the battery case. The panel member is provided at the lower side of the battery case and extends in the vehicle front-and-rear direction and the vehicle width direction. Each of the pair of brackets is provided between a rocker and the panel member in the vehicle vertical direction, and is joined to the respective first flange portion of the lower case and to the panel member.

That is, in the present aspect, the pair of rockers and the pair of brackets are disposed at the vehicle width direction outer sides of the battery case. As a result, in the present aspect the battery case may be protected during a side impact of the vehicle.

In a vehicle lower portion structure according to a fourth aspect, in the vehicle lower portion structure according to any one of the first to third aspects, the panel member includes: a first joining portion that is joined to the bracket; a second joining portion that is joined to a side of a floor wall portion of the lower case at which the side wall portion of the lower case is disposed, the second joining portion being provided at the upper side in the vehicle vertical direction relative to the first joining portion; and a slope portion that links the first joining portion with the second joining portion, the slope portion sloping to the upper side in the vehicle vertical direction toward the side thereof at which the accommodation portion is disposed.

In the vehicle lower portion structure according to the fourth aspect, the panel member includes the first joining portion, the second joining portion and the slope portion. The first joining portion is joined to the bracket. The second joining portion is joined to the side of the floor wall portion of the lower case at which the side wall portion is disposed. The second joining portion is provided at the upper side in the vehicle vertical direction relative to the first joining portion. The slope portion links the first joining portion with the second joining portion. The slope portion is angled to the upper side in the vehicle vertical direction toward the side thereof at which the accommodation portion of the battery case is disposed.

Thus, in the present aspect, because the slope portion of the panel member is provided between the bracket and the side wall portion of the lower case, when a collision load is applied to the panel member in the vehicle width direction during a side impact of the vehicle, the panel member deforms (inflects) about the first joining portion and the second joining portion. As a result, collision energy is absorbed, and the magnitude of a collision load that is applied to the terminal may be reduced.

As described above, a vehicle lower portion structure relating to the present disclosure may both realize a reduction in height of a battery case and, with a simple structure, realize protection of the battery case during a side impact of the vehicle.

### BRIEF DESCRIPTION OF DRAWINGS

Fig. 1 is a schematic exploded perspective view showing structures of a vehicle in which a vehicle lower portion structure according to a present exemplary embodiment is employed.
Fig. 2 is a schematic plan view showing the vehicle lower portion structure according to the present exemplary embodiment.
Fig. 3 is a schematic sectional diagram in which the vehicle lower portion structure shown in Fig. 2 is cut in a vehicle front-and-rear direction.
Fig. 4 is a schematic sectional diagram in which the vehicle lower portion structure shown in Fig. 2 is cut in a vehicle width direction.
Fig. 5 is a schematic end face diagram in which the vehicle lower portion structure shown in Fig. 1 is cut along line A-A.

### DETAILED DESCRIPTION

Below, a vehicle lower portion structure according to an exemplary embodiment of the present invention is described using the attached drawings. Members that are the same as or equivalent to one another in the drawings are assigned the same or similar reference symbols, and duplicative descriptions are not given. Where plural members that are the same as or equivalent to one another are included in the drawings, the reference symbols may be shown for only some of the members, to aid viewing of the drawings. The arrow FR that is shown where appropriate in the drawings indicates a front side in a vehicle front-and-rear direction, the arrow UP indicates an upper side in the vehicle vertical direction, and the arrow RH indicates a vehicle width direction right side, which is a vehicle width direction outer side in the present exemplary embodiment. Where descriptions are given below simply using the directions front, rear, upper, lower, left and right, unless otherwise specified, these represent the front and rear in the vehicle front-and-rear direction, upper and lower in the vehicle vertical direction, and left and right in the vehicle left-and-right direction (vehicle width direction).

### = Structures of the Vehicle Lower Portion Structure =

First, structures of a vehicle in which the vehicle lower portion structure according to the present exemplary embodiment is employed are described.

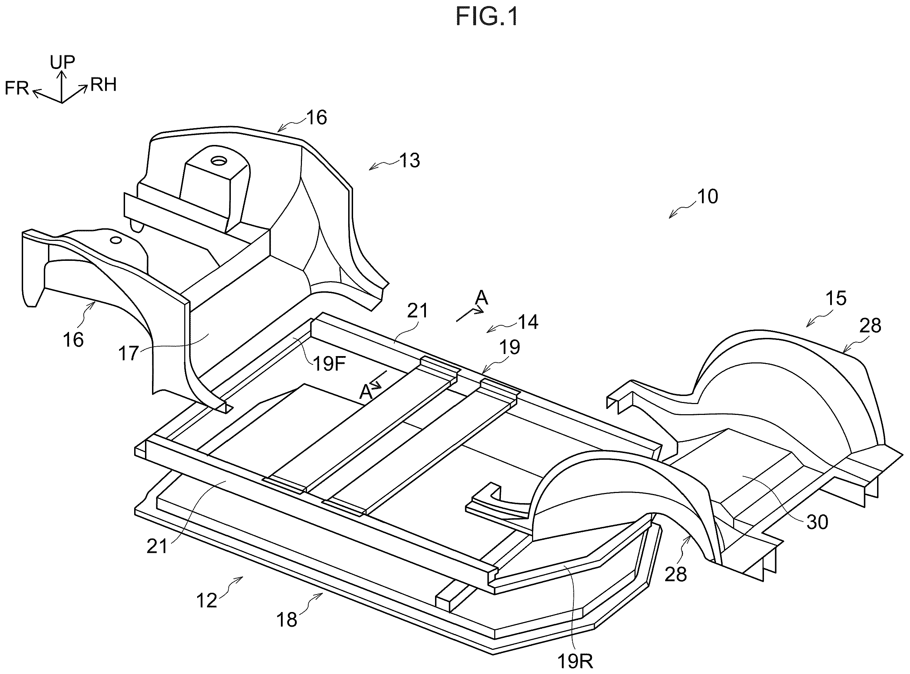

Fig. 1 is an exploded perspective view of a vehicle 10 in which a vehicle lower portion structure 12 according to the present exemplary embodiment is employed. In the present exemplary embodiment, the vehicle 10 is divided into a vehicle front portion (below referred to as a front module) 13, a vehicle middle portion (below referred to as a center module) 14, and a vehicle rear portion (below referred to as a rear module) 15.

The front module 13 includes, for example, a left and right pair of wheel arches 16 and a cross-member 17. Vehicle wheels (not shown in the drawings) may be accommodated in the wheel arches 16. The cross-member 17 links the left and right pair of wheel arches 16. The wheel arches 16 and cross-member 17 are integrally molded (integrated) by die-casting of a material such as an aluminium alloy, a magnesium alloy or the like.

The center module 14 is provided with a storage battery pack (battery case) 18. The storage battery pack 18 is formed of, for example, a light metal such as an aluminium alloy or the like, and is formed in a rectangular box shape with a longer direction in the vehicle front-and-rear direction in plan view. The storage battery pack 18 is supported by a battery frame 19.

The battery frame 19 is formed in, for example, a substantially rectangular frame shape with a longer direction in the vehicle front-and-rear direction in plan view. The battery frame 19 is integrally structured (integrated) to include a left and right pair of side frames (below referred to as "rockers") 21, a front cross 19F and a rear cross 19R. The rockers 21 extend in the vehicle front-and-rear direction at both vehicle width direction outer sides of the storage battery pack 18. The front cross 19F links front ends of the left and right pair of rockers 21. The rear cross 19R links rear ends of the left and right pair of rockers 21.

The battery frame 19 is formed by, for example, extrusion molding or the like of a material such as an aluminium alloy, a magnesium alloy or the like. Structures of the battery frame 19 may be modified as appropriate depending on shapes of the front module 13 and the rear module 15, and a fabrication method of the battery frame 19 may be modified correspondingly.

The rear module 15 includes a left and right pair of wheel arches 28 disposed at the vehicle width direction outer sides and a support member 30. Vehicle wheels (not shown in the drawings) may be accommodated in the wheel arches 28. The support member 30 links the left and right pair of wheel arches 28 and may support a rear seat, which is not shown in the drawings. Similarly to the front module 13, the wheel arches 28 and support member 30 are integrally molded by die-casting of a material such as an aluminium alloy, a magnesium alloy or the like.

Now, principal portions of the vehicle lower portion structure 12 according to the present exemplary embodiment are described.

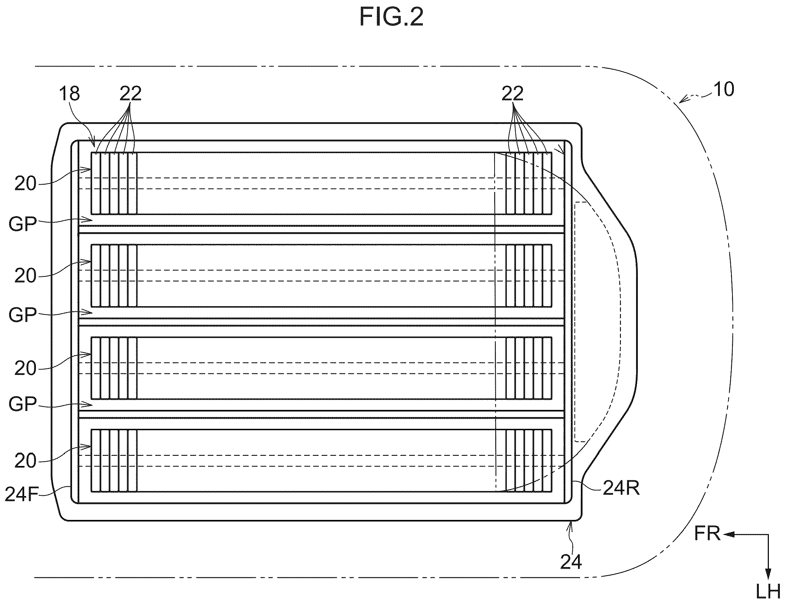

Fig. 2 is a schematic plan view partially showing the vehicle 10 provided with the vehicle lower portion structure 12 according to the present exemplary embodiment. As shown in Fig. 2, the storage battery pack 18 is mounted in the vehicle 10. The storage battery pack 18 includes a plural number (four in the present exemplary embodiment) of storage battery modules 20. The plural storage battery modules 20 are arranged in a row in the vehicle width direction. Gaps GP are formed between the storage battery modules 20. In the present exemplary embodiment, because the number of the storage battery modules 20 is four, the number of the gaps GP formed between the storage battery modules 20 is three.

Each of the storage battery modules 20 includes plural storage battery cells 22. The plural storage battery cells 22 are arranged in the storage battery module 20 in a row in the vehicle front-and-rear direction. That is, the storage battery pack 18 has a structure in which the plural storage battery modules 20, with the plural storage battery cells 22 disposed in rows in the vehicle front-and-rear direction, are disposed in a row in the vehicle width direction.

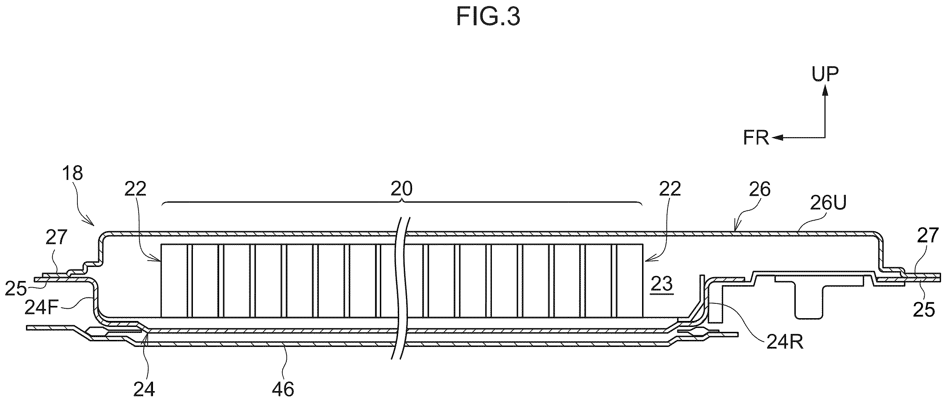

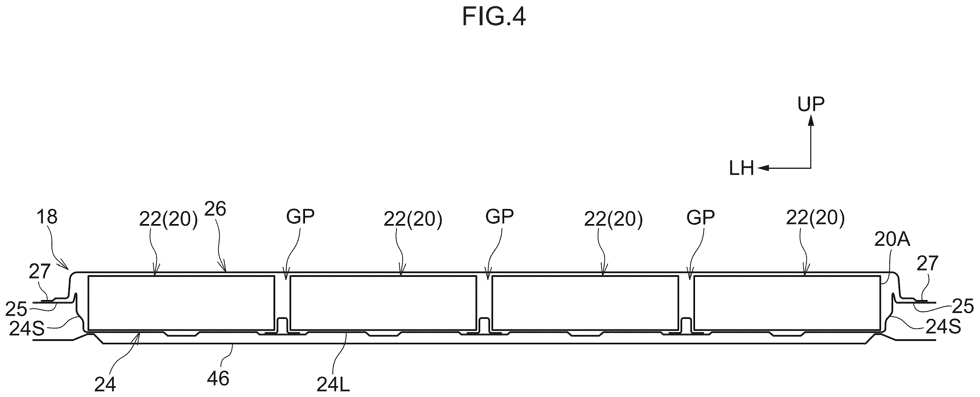

Fig. 3 is a sectional diagram in which the vehicle lower portion structure 12 shown in Fig. 2 is cut in the vehicle front-and-rear direction, and Fig. 4 is a sectional diagram in which the vehicle lower portion structure 12 shown in Fig. 2 is cut in the vehicle width direction. As shown in Fig. 3 and Fig. 4, the storage battery pack 18 includes a lower case 24 and an upper cover 26. The upper cover 26 is not shown in the drawing of Fig. 2. In Fig. 4, the lower case 24 and the upper cover 26 are depicted as lines in order to simplify the shapes.

As shown in Fig. 3 and Fig. 4, the storage battery pack 18 includes the lower case 24 and the upper cover 26. The lower case 24 is a member that is provided with a box-shaped accommodation portion 23 capable of accommodating the storage battery modules 20. The lower case 24 includes a lower plate 24L, a front plate 24F, a rear plate 24R, and a left and right pair of side plates (side wall portions) 24S.

The lower plate 24L is a plate-shaped portion that supports the storage battery modules 20 from the lower side. The front plate 24F and rear plate 24R are plate-shaped portions that are provided standing from, respectively, a front end portion and a rear end portion of the lower plate 24L. The side plates 24S are plate-shaped portions that are provided standing from both sides in the vehicle width direction of the lower plate 24L. An upper face of the lower case 24 is open. A flange portion (first flange portion) 25 protrudes to the outer side of the accommodation portion 23 from a peripheral edge of the lower case 24.

The upper cover 26 is a lid-shaped member that covers the upper face of the lower case 24. Together with the lower case 24, the upper cover 26 structures the accommodation portion 23. The upper cover 26 has a similar structure to the lower case 24, including an upper plate 26U, a front plate 26F, a rear plate 26R, and a left and right pair of side plates 26S. The upper plate 26U is a plate-shaped portion that covers the storage battery modules 20 from the upper side.

A lower face of the upper cover 26 is open. A flange portion (second flange portion) 27 protrudes to the outer side of the accommodation portion 23 from a peripheral edge of the upper cover 26. In a state in which the flange portion 27 is matched up with the flange portion 25 formed at the lower case 24, the flange portion 25 may be joined to the flange portion 27 via a joining portion 29. Thus, the storage battery pack 18 is structured by the lower case 24 and the upper cover 26.

A shear panel 46 that extends in the vehicle front-and-rear direction and the vehicle width direction is provided at the lower side of the storage battery pack 18. The shear panel 46 is formed of a metal plate, such as an aluminium alloy plate, a steel plate or the like. The shear panel 46 is connected to respective sides of the pair of rockers 21. The rockers 21 each extend in the vehicle front-and-rear direction at the two vehicle width direction outer sides relative to the storage battery pack 18 and serve as one of vehicle framework members (see Fig. 1).

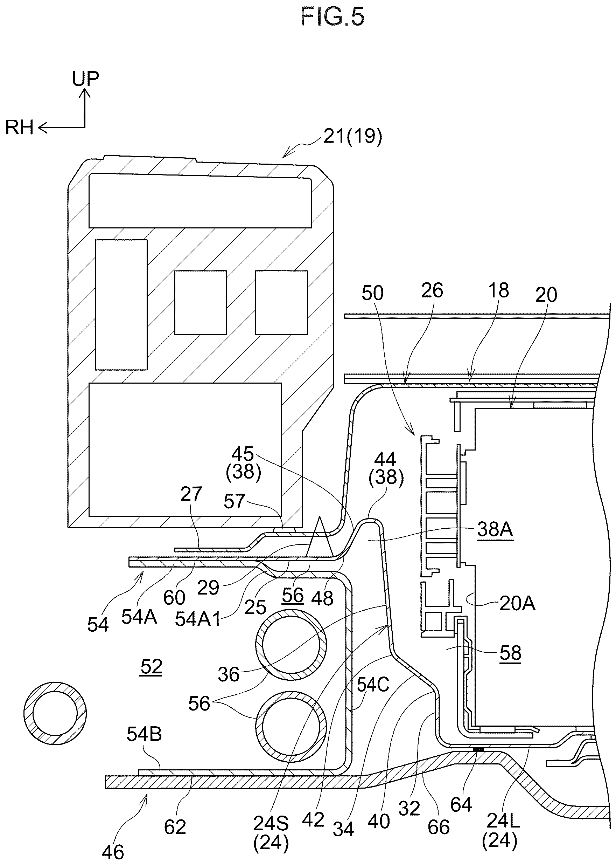

Fig. 5 is an end face diagram cut along line A-A shown in Fig. 1. As shown in Fig. 5, the storage battery modules 20 are provided with a terminal 50 at an upper portion side of a side wall portion 20A. The terminal 50 projects to the vehicle width direction outer side from the side wall portion 20A of the storage battery module 20, so as to connect with auxiliary equipment mounted in the vehicle 10.

Each rocker 21 is provided at the vehicle width direction outer side of the upper cover 26. Accordingly, a gap 52 in the vehicle vertical direction is provided between the rocker 21 and the shear panel 46. A bracket 54 is provided in the gap 52. That is, the bracket 54 is disposed between the rocker 21 and the shear panel 46 in the vehicle vertical direction.

The bracket 54 is formed of, for example, a metal plate such as aluminium alloy plate, steel plate or the like. The bracket 54 extends in the vehicle front-and-rear direction. A cross-sectional shape of the bracket 54 when cut in the vehicle width direction and the vehicle vertical direction forms a substantial letter "U" shape of which the vehicle width direction outer side is open. For example, piping 56 and the like may be routed inside the bracket 54. The piping 56 circulates cooling water to equipment mounted in the vehicle 10.

The bracket 54 includes an upper wall portion 54A, a lower wall portion 54B and an inner wall portion 54C. The upper wall portion 54A and lower wall portion 54B are formed to oppose one another in the vehicle vertical direction. The inner wall portion 54C links an inner end of the upper wall portion 54A with an inner end of the lower wall portion 54B.

A slope portion 54A1 is provided at the side of the upper wall portion 54A at which the inner wall portion 54C is disposed. The slope portion 54A1 slopes to the vehicle lower side toward the vehicle width direction inner side. A gap 56 is formed between the slope portion 54A1 and the flange portion 25 that is formed at the lower case 24. The slope portion 54A1 is provided at a position that overlaps with at least a portion of the terminal 50 in a vehicle side view.

The upper wall portion 54A of the bracket 54 is joined to the flange portion 25 via a joining portion 60. The flange portion 25 of the lower case 24 is joined to the flange portion 27 of the upper cover 26 via the joining portion 29. The flange portion 27 of the upper cover 26 is joined to the rocker 21 via a joining portion 57.

The shear panel 46 is joined to the lower wall portion 54B of the bracket 54 via a joining portion 62. The shear panel 46 is joined, via a joining portion 64 that is at the vehicle width direction inner side relative to the joining portion 62, to the lower plate 24L of the lower case 24 at the side thereof at which the side plate 24S is disposed. The joining portion 64 is provided at the upper side in the vehicle vertical direction relative to the joining portion 62. The joining portion 62 and the joining portion 64 are linked by a slope portion 66 that slopes to the upper side in the vehicle vertical direction toward the side thereof at which the accommodation portion 23 of the storage battery pack 18 is disposed.

The side plate 24S of the lower case 24 includes a vertical wall portion 32, slope portions 34 and 36, and an upward protruding portion 38. The vertical wall portion 32 is formed at a lower portion of the side plate 24S of the lower case 24, and is provided standing toward the upper side from an outer edge of the lower plate 24L. The slope portion 34 is formed at the upper side of the vertical wall portion 32. The vertical wall portion 32 and the slope portion 34 are linked via an inflected portion 40.

The slope portion 34 is formed to slope diagonally toward the upper side to the vehicle width direction outer side, starting from the inflected portion 40. The slope portion 36 is formed at the upper side of the slope portion 34, and the slope portion 34 and slope portion 36 are linked by an inflected portion 42. The slope portion 36 is formed to slope diagonally toward the upper side to the vehicle width direction outer side, starting from the inflected portion 42. The slope portion 36 is at a smaller angle from the vertical than the slope portion 34.

The terminal 50 projects to the vehicle width direction outer side from the side wall portion 20A of the storage battery module 20. The exterior of the terminal 50 is formed in a substantially rectangular shape in a cross section cut in the vehicle width direction and the vehicle vertical direction. A step portion 58 is provided at the lower side of the terminal 50. The step portion 58 is formed in the vehicle width direction between the terminal 50 and the side wall portion 20A of the storage battery module 20. Interference between the side plate 24S of the lower case 24 and the terminal 50 is averted by the formation of the inflected portion 40, slope portion 34, inflected portion 42 and slope portion 36.

The upward protruding portion 38 is provided at an upper end portion of the slope portion 36. The upward protruding portion 38 is provided at a position that overlaps with at least a portion of the terminal 50 in the vehicle side view. The upward protruding portion 38 includes an inflection point 44. The inflection point 44 is a peak that is formed by a slope portion 45 being bent back diagonally toward the lower side to the vehicle width direction outer side. That is, the upward protruding portion 38 includes the slope portion 45, the inflection point 44 and the slope portion 36. The upward protruding portion 38 is formed with the slope portion 45 and the slope portion 36 opposing one another.

The upward protruding portion 38 and the flange portion 25 are linked via an inflected portion 48. The flange portion 25 protrudes to the vehicle width direction outer side, starting from the inflected portion 48, and the flange portion 25 is joined to the flange portion 27 of the upper cover 26 via the joining portion 29.

The upward protruding portion 38 is formed to protrude to the upper side relative to the flange portion 25. The upward protruding portion 38 is bent back in the vehicle vertical direction, starting from the inflection point 44. Thus, the slope portion 45 and the slope portion 36 are formed in a two-layer overlapping state in side view.

### = Operation and Effects of the Vehicle Lower Portion Structure =

Now, operation and effects of the vehicle lower portion structure according to the present exemplary embodiment are described.

In the vehicle 10 in which the vehicle lower portion structure 12 according to the present exemplary embodiment illustrated in Fig. 1 is employed, as shown in Fig. 2, the storage battery modules 20 are structured by the plural storage battery cells 22. The storage battery cells 22 are arranged in a row in the vehicle front-and-rear direction in each storage battery module 20, and the storage battery modules 20 are arranged in a row in the vehicle width direction.

Thus, the plural storage battery cells 22 may be arranged efficiently in the vehicle front-and-rear direction and the vehicle width direction. In particular, because the direction of arrangement of the storage battery cells 22 in each storage battery module 20 is the vehicle front-and-rear direction, the number of storage battery cells 22 in one row may be greater than in a structure in which the storage battery cells 22 are arrayed in the vehicle width direction.

In the present exemplary embodiment, the storage battery pack 18 in which the plural storage battery cells 22 are accommodated includes the lower case 24 and the upper cover 26. The flange portion 25 formed at the outer edge portion of each side plate 24S of the lower case 24 is joined to the flange portion 27 formed at the outer edge portion of each side plate 26S of the upper cover 26, via the joining portion 29.

In the present exemplary embodiment, the terminal 50 of the storage battery module 20 that is to connect to auxiliary equipment mounted in the vehicle 10 is disposed at the upper portion side of the side wall portion 20A provided at the vehicle width direction outer side. Thus, because the terminal 50 projects to the vehicle width direction outer side from the side wall portion 20A of the storage battery module 20 according to the present exemplary embodiment, the storage battery module 20 may be reduced in height compared to a structure, not shown in the drawings, in which the terminal 50 is provided standing from an upper portion of the storage battery module 20. Hence, the storage battery pack 18 may be reduced in height.

The inflected portion 40 is formed at each side plate 24S of the lower case 24. The inflected portion 40 is inflected toward the direction of the step portion 58 provided at the lower side of the terminal 50. During a side impact of the vehicle 10, the side plate 24S of the lower case 24 deforms about the inflected portion 40. During the side impact of the vehicle, because the inflected portion 40 is provided at the lower side of the terminal 50 of the storage battery module 20, the inflected portion 40 abuts against the side wall portion 20A of the storage battery module 20 before a collision load is applied to the terminal 50.

Thus, collision energy is absorbed (EA) by the side plate 24S of the lower case 24 being deformed via the inflected portion 40. Therefore, the magnitude of a collision load that is applied to the terminal 50 may be reduced. That is, because the shape of the side plate 24S of the lower case 24 is altered in the present exemplary embodiment, the storage battery pack 18 may be protected during a side impact of the vehicle 10.

In the present exemplary embodiment, the flange portion 25 projects toward the outer side of the accommodation portion 23 from the outer edge portion of the lower case 24. In addition, the flange portion 27 projects toward the outer side of the accommodation portion 23 from the outer edge portion of the upper cover 26, and the flange portion 27 is joined to the flange portion 25. The upward protruding portion 38 is formed at the upper end portion of the side plate 24S of the lower case 24. The upward protruding portion 38 overlaps with a portion of the terminal 50 in the vehicle side view, the upward protruding portion 38 is bent back in the vehicle vertical direction with the inflection point 44 being provided at the upper side relative to the flange portion 25, and the upward protruding portion 38 links with the flange portion 25.

Thus, the upward protruding portion 38 is formed in a shape that provides a gap 38A in the vehicle width direction. Hence in the present exemplary embodiment, when a collision load is applied during a side impact of the vehicle 10, the upward protruding portion 38 is crushed in the vehicle width direction. As a result, collision energy may be absorbed, and the magnitude of a collision load that is applied to the terminal 50 may be reduced. Hence, a collision load applied to the side at which the storage battery module 20 is disposed may be reduced.

The present exemplary embodiment is further provided with the rockers 21, the shear panel 46 and the brackets 54. The rockers 21 respectively extend in the vehicle front-and-rear direction at the two vehicle width direction outer sides of the storage battery pack 18. Each bracket 54 is provided between the rocker 21 and the shear panel 46 in the vehicle vertical direction. The bracket 54 is joined to the flange portion 25 of the lower case 24 and to the shear panel 46.

That is, in the present exemplary embodiment, the rocker 21 and bracket 54 are disposed at the vehicle width direction outer side of the storage battery pack 18. Therefore, during a side impact of the vehicle 10 according to the present exemplary embodiment, the storage battery pack 18 may be protected by the rocker 21 and the bracket 54.

In the present exemplary embodiment, the shear panel 46 extends in the vehicle front-and-rear direction and the vehicle width direction at the lower side of the storage battery pack 18. That is, in the present exemplary embodiment the lower side of the storage battery pack 18 is covered by the shear panel 46. Therefore, the storage battery modules 20 are protected from foreign objects on a road surface and the like by the shear panel 46.

In the present exemplary embodiment, the shear panel 46 includes each joining portion 62, joining portion 64 and slope portion 66. The joining portion 62 is joined to the bracket 54. The joining portion 64 is joined to the side of the lower plate 24L of the lower case 24 at which the side plate 24S is disposed, and is provided at the upper side in the vehicle vertical direction relative to the joining portion 62. The slope portion 66 links the joining portion 64 with the joining portion 62. The slope portion 66 is angled to the upper side in the vehicle vertical direction toward the side thereof at which the accommodation portion 23 of the storage battery pack 18 is disposed.

Thus, because the slope portion 66 of the shear panel 46 according to the present exemplary embodiment is disposed between the bracket 54 and the side plate 24S of the lower case 24, when a collision load is applied to the shear panel 46 in the vehicle width direction during a side impact of the vehicle 10, the shear panel 46 deforms (inflects) about the joining portion 62 and the joining portion 64. Thus, collision energy is absorbed (EA). Hence, the magnitude of a collision load that is applied to the terminal 50 may be reduced.

In the present exemplary embodiment, the upper wall portion 54A of each bracket 54 is joined to the flange portion 25 of the lower case 24 via the joining portion 60, and the slope portion 54A1 is provided at the side of the upper wall portion 54A at which the inner wall portion 54C is disposed. The slope portion 54A1 is angled to the vehicle lower side toward the vehicle width direction inner side. As a result, the gap 56 is formed between the upper wall portion 54A and the flange portion 25 of the lower case 24 at the side of the upper wall portion 54A at which the inner wall portion 54C is disposed. The slope portion 54Al is provided at a position that overlaps with the terminal 50 in the vehicle side view.

Therefore, in the present exemplary embodiment, when a collision load is applied to the bracket 54 in the vehicle width direction during a side impact of the vehicle 10, the bracket 54 deforms about the outer end and inner end of the slope portion 54A1. Thus, in the present exemplary embodiment collision energy is absorbed by the bracket 54, and the magnitude of a collision load that is applied to the terminal 50 may be reduced.

Above, an exemplary embodiment of the present disclosure has been described, but the present disclosure is not limited by this exemplary embodiment. The exemplary embodiment and various variant examples may be used in suitable combinations, and it will be clear that numerous modes may be embodied within a technical scope not departing from the gist of the present disclosure.

## Claims

1. A vehicle lower portion structure wherein a battery case mounted at a vehicle lower portion comprises:
a lower case that structures an accommodation portion in which a battery module is accommodated, the battery module being provided with a terminal to be connected to auxiliary equipment mounted in the vehicle, the terminal projecting to a vehicle width direction outer side from an upper portion side of a side wall portion provided at the vehicle width direction outer side of the battery module; and
an upper cover that, together with the lower case, structures the accommodation portion, and wherein an inflected portion is formed in a side wall portion of the lower case, the inflected portion being provided at the lower side of the terminal and inflecting toward a direction of a step portion formed in the battery module, the step portion being formed in the vehicle width direction between the terminal and the side wall portion of the battery module.

2. The vehicle lower portion structure according to claim 1, wherein the battery case further comprises:
a first flange portion that projects to the outer side of the accommodation portion from an outer edge portion of the lower case; and
a second flange portion that projects to the outer side of the accommodation portion from an outer edge portion of the upper cover and is joined to the first flange portion,
and wherein an upward protruding portion is formed at an upper end portion of the side wall portion of the lower case, the upward protruding portion
overlapping with at least a portion of the terminal in a vehicle side view, being provided with an inflection point at the upper side relative to the first flange portion and being bent back in the vehicle vertical direction, and
linking with the first flange portion.

3. The vehicle lower portion structure according to claim 2, further comprising:
a pair of rockers that extend in the vehicle front-and-rear direction at both vehicle width direction outer sides of the battery case;
a panel member that is provided at the lower side of the battery case and that extends in the vehicle front-and-rear direction and the vehicle width direction; and
a pair of brackets that are provided between each rocker and the panel member in the vehicle vertical direction, the brackets each being joined to the first flange portion and the panel member.

4. The vehicle lower portion structure according to claim 3, wherein the panel member comprises:
a first joining portion that is joined to the bracket;
a second joining portion that is joined to a side of a floor wall portion of the lower case at which the side wall portion of the lower case is disposed, the second joining portion being provided at the upper side in the vehicle vertical direction relative to the first joining portion; and
a slope portion that links the first joining portion with the second joining portion, the slope portion sloping to the upper side in the vehicle vertical direction toward the side thereof at which the accommodation portion is disposed.
